# EUROPÄISCHE PATENTSCHRIFT

(11) **EP 4 384 046 B1**
(45) Veröffentlichungstag und Bekanntmachung des Hinweises auf die Patenterteilung: **23.07.2025**
(21) Anmeldenummer: 22761226.4
(22) Anmeldetag: 08.08.2022
(51) Int. Cl.: A47B 47/00, F16B 12/40

(54) **VERBINDUNGSSYSTEM SOWIE VERBINDUNGSELEMENT**
CONNECTION SYSTEM AND CONNECTION ELEMENT
SYSTÈME DE RACCORDEMENT ET ÉLÉMENT DE RACCORDEMENT

(30) Priorität: 13.08.2021 DE 102021121072
(43) Veröffentlichungstag der Anmeldung: 19.06.2024
(73) Patentinhaber: ATHENE GROUP AG, 6300 Zug (CH)
(72) Erfinder: JOHNER, Michael, 8005 Zürich (CH)
(74) Vertreter: Stoffregen, Hans-Herbert
(86) Internationale Anmeldenummer: PCT/EP2022/072191
(87) Internationale Veröffentlichungsnummer: WO 2023/016963

(56) Entgegenhaltungen:
- EP-A1- 2 093 434
- DE-A1- 2 709 421
- DE-U1- 9 400 736

## Beschreibung

Die Erfindung bezieht sich auf ein Verbindungssystem, umfassend zumindest ein Rohrelement, einen zumindest einen Schlitz aufweisenden Spreizkörper, ein in einem Innengewinde eine Durchgangsöffnung (146) des Spreizkörpers schraubbares Schraubelement, mittels dessen der Spreizkörper zum klemmenden Fixieren in dem Rohrelement spreizbar ist, sowie ein mit dem Spreizkörper verbindbarer Verbindungskörper, wobei der Spreizkörper ein Hülsenkörper ist, das Innengewinde diametral gegenüberliegend zu dem zumindest einen Schlitz verläuft, und bei klemmender Fixierung des Hülsenkörpers in dem Rohrelement das Schraubelement zum Spreizen des Schlitzes (144) auf dessen den Schlitz begrenzende Randbereiche einwirkt.

Auch bezieht sich die Erfindung auf ein Verbindungselement umfassend einen Spreizkörper in Form eines Hülsenkörpers (118), mit zumindest einem Längsschlitz (144) sowie ein in ein Innengewinde (148) einer Durchgangsöffnung (146) des Hülsenkörpers einschraubbares Schraubelement (150), wobei diametral gegenüberliegend zu dem Längsschlitz die das Innengewinde aufweisende Durchgangsöffnung verläuft.

Entsprechende Verbindungssysteme werden z.B. für Gestelle von Möbeln benutzt, bei denen zwischen von Rohrelementen gebildeten Zellen Tablare, Schubladen, Tragfächer o.ä. Möbelelemente angeordnet bzw. befestigt werden.

Als Spreizkörper können ineinander schiebbare Spreizflügel (DE 26 44 300 A1) oder gegeneinander verstellbare Verankerungs- und Ausdehnungskörper (EP 3 017 201 B1) benutzt werden, die sich innerhalb der Rohrelemente erstrecken und mit einem Verbindungskörper verbunden werden.

Der DE 74 02 721 U1 ist eine Rohrverbindung zu entnehmen, bei der ein aus einem Vollmaterial bestehender Spreizkörper einen Längsschlitz aufweist und die von dem Längsschlitz getrennten Körperhälften mittels eines in den Spreizkörper einschraubbaren Schraubelementes auseinandergedrückt werden. Auch besteht die Möglichkeit, dass mehrere entsprechende Spreizkörper integrale Abschnitte eines Verbindungskörpers sind, um Rohrelemente zu befestigen.

Aus der DE 94 00 736 U1 ist ein Verbindungsstück für Rohre von Möbelgestellen bekannt. Das Verbindungsstück weist Ansätze auf, die jeweils einen ersten Druckkörper und einen zweiten Druckkörper umfassen. Mittels Stellschrauben werden die Druckstücke gespreizt, um ein von dem Einsatz aufgenommenes Rohr zu fixieren.

Gegenstand der DE 27 09 421 A1 ist ein Verbinder für Hohlprofile, wobei Anschlussstutzen mit einem würfelförmigen Verbindungskörper verbunden werden.

Ein Knotenverbinder ist aus der EP 2 093 434 A1 bekannt.

Der vorliegenden Erfindung liegt die Aufgabe zugrunde, ein Verbindungssystem sowie ein Verbindungselement der zuvor genannten Art so weiterzubilden, dass mit konstruktiv einfachen Maßnahmen ein sicheres Fixieren des Rohrelementes ermöglicht wird. Eine einfache Montage soll sichergestellt sein. Das Verbindungselement soll bei geringem Gewicht stabil ausgebildet sein.

Zur Lösung zumindest einer dieser Aspekte sieht die Erfindung im Wesentlichen vor, dass der Hülsenkörper eine Umfangswandung hohlzylindrischer Geometrie aufweist, wobei ein erster Stirnbereich offen ist und gegenüberliegender zweiter Stirnbereich eine von einem mit dem Verbindungskörper verbindbaren Verbindungselement durchsetzbare Bodenwandung aufweist, dass die Umfangswandung zumindest zwei einen Umfangswandabschnitt begrenzende Ausschnitte aufweist, in dem das Innengewinde verläuft, und dass jeder Ausschnitt einen von dem offenen Stirnbereich ausgehenden in Längsachsenrichtung des Hülsenkörpers verlaufenden äußeren ersten Abschnitt sowie einen bodenwandseitigen inneren zweiten Abschnitt aufweist, der querschnittsmäßig gegenüber dem äußeren Abschnitt erweitert ist derart, dass der die Durchgangsöffnung mit dem Innengewinde aufweisende Umfangswandabschnitt bodenwandseitig eine geringere Erstreckung als im Stirnrandbereich aufweist, betrachtet in parallel zur Bodenwandung verlaufenden Ebenen.

Aufgrund der erfindungsgemäßen Lehre bedarf es abweichend vom Stand der Technik keines Spreizelements aus Vollmaterial. Vielmehr wird ein Hülsenkörper benutzt, um die erforderliche Verbindung zum Rohrelement einerseits und zum Verbindungskörper andererseits herzustellen, von dem mehrere Rollenelemente mit erfindungsgemäßen Spreizkörpern ausgehen können.

Insbesondere ist vorgesehen, dass der zumindest eine Schlitz, auf dessen Randbereiche das Schraubelement zum Spreizen des Hülsenkörpers einwirkt, sich über die gesamte oder nahezu die gesamte Länge des Hülsenkörpers erstreckt. Der Schlitz sollte von dem offenen Stirnbereich ausgehend sich bis zur Bodenwandung hin erstrecken.

Um ein einfaches Positionieren des Hülsenkörpers in Bezug auf den Verbindungskörper, der als Knotenelement zu bezeichnen ist, zu ermöglichen, ist in Weiterbildung vorgesehen, dass die Bodenwandung außenseitig einen die von dem Verbindungselement durchsetzte Öffnung ringförmig umgebenden Vorsprung aufweist, der in eine entsprechende Ausnehmung in dem Verbindungskörper eingreift.

In Weiterbildung sieht die Erfindung vor, dass eine Verdrehsicherung zwischen Hülsenkörper und Verbindungskörper vorhanden ist, um zu ermöglichen, dass die Hülsenkörper stets im gleichen Winkel zum Verbindungskörper ausgerichtet sind. Hierdurch ergibt sich eine Vereinfachung bei der Verbindung des Rohrelements mit dem Hülsenkörper bzw. das Ausrichten des Rohrelementes auf den Hülsenkörper. Insbesondere ist eine Vereinfachung dadurch gegeben, dass dann, wenn das Rohrelement zu einem mit einem Verbindungskörper verbundenen Hülsenkörper ordnungsgemäß ausgerichtet ist, das Rohrelement gleichzeitig automatisch auf einen im gegenüberliegenden Endbereich einzubringenden Hülsenkörper ausgerichtet ist, der von einem entsprechenden Verbindungskörper ausgeht.

Zur Verdrehsicherung ist insbesondere vorgesehen, dass von der Außenfläche der Bodenwandung des Hülsenkörpers ein Vorsprung ausgeht, der in eine entsprechende Aussparung in dem Verbindungskörper eingreift oder umgekehrt.

In Weiterbildung der Erfindung weist die Umfangswandung des Hülsenkörpers zwei einen Wandabschnitt begrenzende Ausschnitte auf, in dem das Innengewinde verläuft. Dabei sollten die Ausschnitte symmetrisch zu einer Ebene verlaufen, die sich entlang des zu spreizenden Schlitzes erstreckt und sowohl den Schlitz als auch die das Innengewinde aufweisende Öffnung in dem Wandabschnitt mittig schneidet.

Durch die Ausschnitte ist insbesondere der Vorteil gegeben, dass der Wandabschnitt beim Einschrauben des Schraubelementes und nach Wechselwirken mit den Randbereichen des Schlitzes bei weiterem Einschrauben des Schraubelementes ohne zu großen Kraftaufwand in Richtung Innenfläche des Rohrelementes gedrückt werden kann, wodurch das klemmende Fixieren im gewünschten Umfang sichergestellt wird.

Besonders hervorzuheben ist auch, dass Querschnitt des Hülsenkörpers von der Bodenwandung ausgehend in Richtung des offenen Stirnbereichs sich verringert, also eine Konusform vorliegt, wobei Außenquerschnitt des Hülsenkörpers im Bodenwandbereich dem Innenquerschnitt des Rohrelementes entsprechen sollte. Hierdurch ergibt sich der Vorteil, dass der Hülsenkörper nach Einschieben in das Rohrelement aufgrund der aneinander angepassten Querschnitte bereits derart fixiert ist, dass ein unkontrolliertes Verschieben dem Grunde nach vermieden wird. Infolgedessen kann das Rohrelement mit dem Hülsenkörper bewegt werden, ohne dass die zuvor erfolgte Ausrichtung zwischen der von dem Schraubelement zu durchsetzenden Öffnung im Rohrelement zu der das Innengewinde aufweisenden Öffnung im Hülsenkörper verloren geht.

Das Innengewinde kann in einem Düsenzug des Hülsenkörpers oder in einer in den Hülsenkörper eingesetzten Einpressmutter oder -buchse verlaufen.

Bei dem Hülsenkörper handelt es sich insbesondere um einen Blechkörper, der z.B. durch Stanzen, Rollen und Prägen hergestellt ist. Ein Blech der Stärke vom 2 mm ist ausreichend, um die erforderliche Stabilität zu erzielen.

Selbstverständlich kommen auch andere geeignete Materialien in Frage wie z.B. Kunststoff.

Die Erfindung zeichnet sich auch aus durch ein Verbindungselement, umfassend einen Spreizkörper in Form eines Hülsenkörper, mit zumindest einem Längsschlitz sowie ein in ein Innengewinde einer Durchgangsöffnung des Hülsenkörpers einschraubbares Schraubelement, wobei diametral gegenüberliegend zu dem Längsschlitz die das Innengewinde aufweisende Durchgangsöffnung verläuft, wobei der Hülsenkörper eine Umfangswandung hohlzylindrischer Geometrie aufweist, wobei ein erster Stirnbereich offen ist und gegenüberliegender zweiter Stirnbereich eine von einem Verbindungselement durchsetzbare Bodenwandung aufweist, dass die Umfangswandung zumindest zwei einen Umfangswandabschnitt begrenzende Ausschnitte aufweist, in dem das ein Innengewinde verläuft, und dass jeder Ausschnitt einen von dem offenen Stirnbereich ausgehenden in Längsachsenrichtung des Hülsenkörpers verlaufenden äußeren ersten Abschnitt sowie einen bodenwandseitigen inneren zweiten Abschnitt aufweist, der querschnittsmäßig gegenüber dem äußeren Abschnitt erweitert ist derart, dass der die Durchgangsöffnung mit dem Innengewinde aufweisende Umfangswandabschnitt bodenwandseitig eine geringere Erstreckung als im Stirnrandbereich aufweist, betrachtet in parallel zur Bodenwandung verlaufenden Ebenen.

Das Schraubelement sollte sich bei fixiertem Rohr zumindest abschnittweise innerhalb der Rohrwandung befinden, insbesondere flächenbündig mit der Außenfläche des Rohres abschließen. Dies gilt auch, wenn das Schraubelement einen Kopf besitzt. Somit ergibt sich ein zusätzlicher Verdrehschutz.

Die Öffnung der Bodenwandung sollte bodenwandaußenseitig von einer ringförmigen Erhebung umgeben sein. Um eine Verdrehsicherung zu ermöglichen, sollte von der Außenfläche der Bodenwandung ein Vorsprung ausgehen bzw. eine Aussparung vorhanden sein, die ein Drehen des Hülsenkörpers um dessen Längsachse beim Zusammenwirken mit einem Gegenelement, wie Verbindungskörper, verhindert.

Das Verbindungselement zeichnet sich insbesondere durch die erläuterten Merkmale aus.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnungen zu entnehmenden bevorzugten Ausführungsbeispiels.

Es zeigen:
- Fig. 1: Prinzipdarstellungen von von einem Knotenelement ausgehenden Rohrelementen,
- Fig. 2: eine erste teilweise auseinandergezogene Darstellung einer Verbindung eines Rohrelementes mit einem Knotenelement,
- Fig. 3: eine zweite teilweise auseinandergezogene Darstellung einer Verbindung eines Rohrelementes mit einem Knotenelement,
- Fig. 4: eine perspektivische Darstellung, teilweise im Schnitt, einer Verbindung zwischen einem Rohrelement und einem Knotenelement,
- Fig. 5: einen Querschnitt durch ein Rohrelement mit Spreizkörper,
- Fig. 6: eine Seitenansicht eines Spreizkörpers in Richtung Innengewinde,
- Fig. 7: einen Schnitt entlang der Linie A-A in Fig. 6,
- Fig. 8: eine Seitenansicht des Spreizkörpers in Richtung des zu spreizenden Schlitzes,
- Fig. 9: eine weitere Seitenansicht des Spreizkörpers gegenüber der Darstellung gemäß Fig. 6 um 90° gedreht,
- Fig. 10: eine Draufsicht auf den Spreizkörper,
- Fig. 11: eine Unteransicht des Spreizkörpers,
- Fig. 12: eine erste perspektive Darstellung des Spreizkörpers in Richtung Bodenwandung und
- Fig. 13: eine zweite perspektivische Darstellung des Spreizkörpers in Richtung offenen Stirnbereichs.

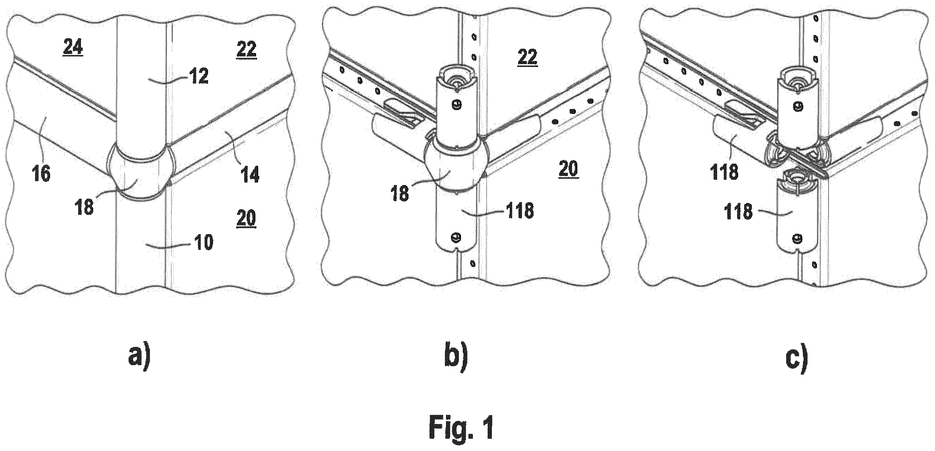

Anhand der Figuren soll die erfindungsgemäße Lehre eines Verbindungssystems bzw. eines Verbindungselements erläutert werden, um Rohrelemente - nachstehend kurz Rohre genannt - zur Bildung eines Gestells zu verbinden, das z. B. für Möbel Verwendung findet, um nur ein Anwendungsbeispiel zu nennen. Hierzu werden entsprechende Rohre 10, 12, 14, 16 über einen als Knotenelement zu bezeichnenden Verbindungskörper 18 verbunden. Gehen gemäß Fig. 1 von dem Knotenelement vier Rohrelemente 10, 12, 14, 16 aus, die jeweils einen rechten Winkel zueinander einschließen, so kann auch eine andere Anzahl von Rohren mit einem Knotenelement verbunden werden, und zwar in Abhängigkeit von der Anzahl von Gewindebohrungen in entsprechenden Knotenelementen. Insbesondere ist vorgesehen, dass der Verbindungskörper 18 entlang drei rechtwinklig zueinander verlaufender Achsen verlaufende durchgehende Gewindebohrungen aufweist, um Rohre befestigen zu können. Nicht genutzte Gewindebohrungen können mit einem Blindstopfen verschlossen werden.

Ganz allgemein können die Verbindungskörper oder Knotenelemente eine auf den Einsatzzweck ausgelegte Anzahl von Gewindebohrungen aufweisen. In Abhängigkeit von der Anzahl der mit einem Knotenelement zu verbindenden Rohren sind 1-, 2-, 3-, 4-, 5- oder 6-armige Knotenelemente möglich, wobei in Abhängigkeit von den Dimensionierungen von Knotenelement und Rohr auch eine hiervon abweichende Anzahl gegeben sein kann.

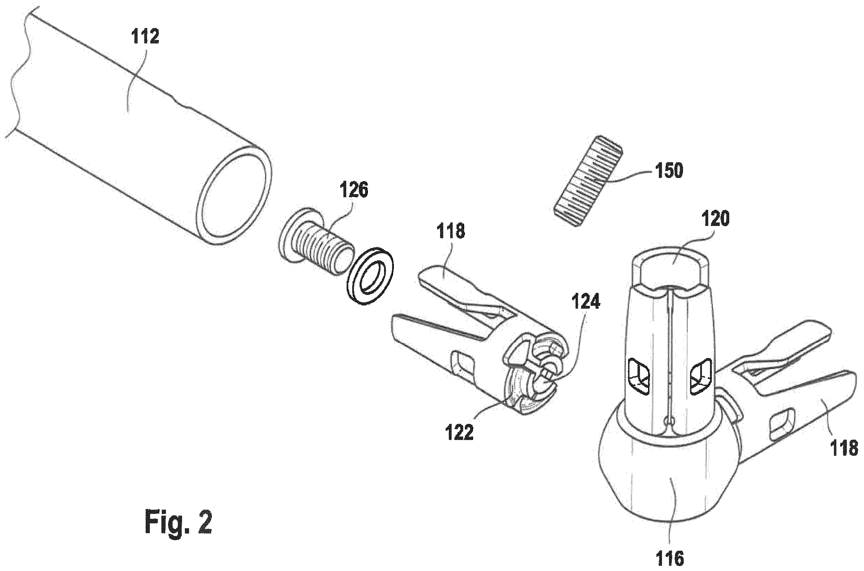

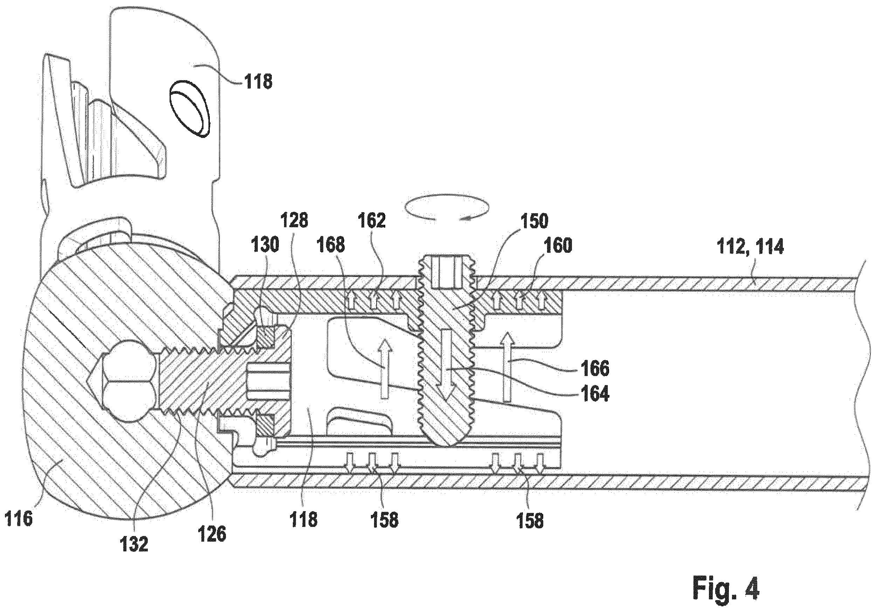

Um die Rohre 10, 12, 14, 16 mit dem Knotenelement verbinden zu können, wird eine Konstruktion gewählt, wie diese selbsterklärend den Fig. 2 bis 13 zu entnehmen ist, ohne dass es dem Grunde nach näherer Erläuterungen bedarf.

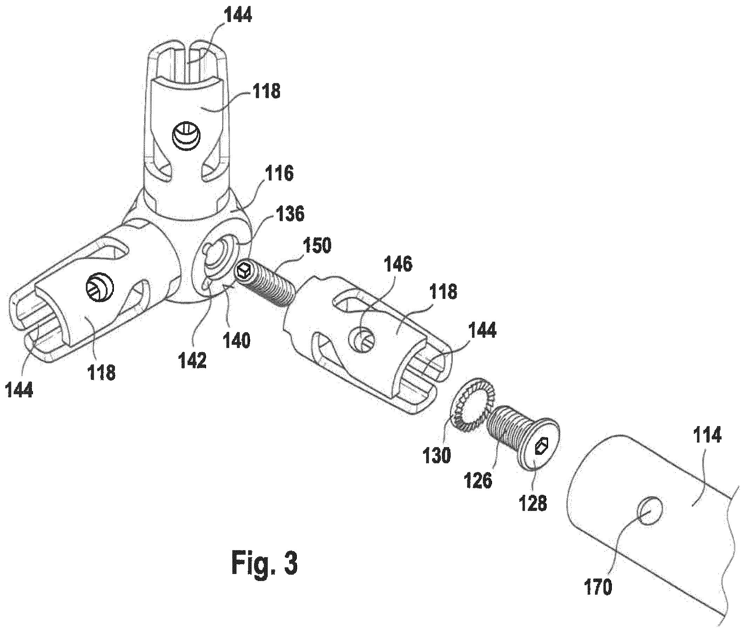

Anhand der Fig. 2 und 3 sollen durch die teilweise auseinandergezogene Darstellungen Aufbau und Funktion des erfindungsgemäßen Verbindungssystems erläutert werden, um ein Rohr 112, 114 mit einem Knotenelement 116 zu verbinden.

Das Knotenelement 116 weist abgerundete Bereiche und zwischen diesen verlaufende ebene Bereiche auf, auf die in nachstehend beschriebener Weise die Rohre 112, 114 mit ihren Stirnflächen aufliegen bzw. zu diesen ausgerichtet sind. Insoweit sind gleichfalls die zeichnerischen Darstellungen selbsterklärend.

Wesentliches Element des Verbindungssystems ist ein nachstehend als Hülse 118 bezeichneter Hülsenkörper, der eine Hohlzylindergeometrie mit einem offenen Stirnbereich bzw. offener Stirnseite 120 und einer von einer Bodenwandung 122 begrenzten Stirnseite aufweist. Die Hülsenkörper werden sämtlichst mit dem Bezugszeichen 118 gekennzeichnet.

Jeweils gleiche Bezugszeichen werden auch für die weiteren Elemente benutzt, die verwendet werden, um das Rohr 112 bzw. 114 mit dem Knotenelement 116 zu verbinden.

Die Bodenwandung 122 weist eine mittig verlaufende Durchbrechung 124 auf, die von einem insbesondere als Flachkopfschraube ausgebildeten Schraubelement 126 durchsetzt ist, zwischen dessen flanschartigem Kopf 128 und Innenseite der Bodenwandung 122 eine Sperrkantscheibe 130 vorgesehen sein kann.

Die Flachkopfschraube ist in eine ein Innengewinde aufweisende Bohrung 132 des Knotenelements 116 einschraubbar, wie sich selbsterklärend aus der Zeichnung ergibt. Hierdurch wird die Hülse 118 mit dem Knotenelement 116 verbunden.

Die Bodenwandung 122 weist einen die Durchbrechung 124 umgebenden ringförmigen Vorsprung 134 auf, der in eine entsprechende Vertiefung 136 des Knotenelements 116 eingreift, die die das Innengewinde aufweisende Bohrung 132 umgibt, um ein einfaches Zentrieren zu ermöglichen.

Des Weiteren weist die Bodenwandung 122 zumindest einen radial verlaufenden insbesondere stegartigen Vorsprung 138 auf, der eine Unverdrehbarkeit der Hülse 118 zu dem Knotenelement 116 dann sicherstellt, wenn die der Hülse 118 ordnungsgemäß zu dem Knotenelement 116 ausgerichtet und eingesetzt ist. Entsprechend weist eine der Hülse 118 zugewandte und als Anlagefläche für die Bodenwandung 122 dienende Fläche 140 des Knotenelements 116 eine an den Vorsprung 138 angepasste Aussparung 142 auf.

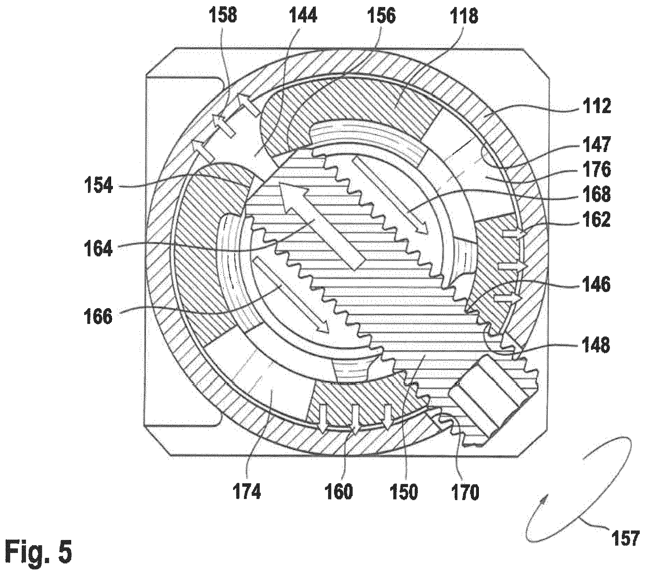

Der Hülsenkörper bzw. die Hülse 118 weist einen von der offenen Stirnseite 120 ausgehenden Längsschlitz 144 auf, der als Spreizschlitz zu bezeichnen ist, mittels dessen die Hülse 118 zum klemmenden Fixieren an der Innenfläche 147 des Rohrs 112 bzw. 114 gespreizt wird, wie nachstehend anhand der Fig. 5 erläutert wird. Der Längsschlitz 144 erstreckt sich über die gesamte Länge der Hülse 118 bis zur Bodenwandung 122 hin.

Diametral gegenüberliegend zu dem Längsschlitz 144 weist die Hülse 118 eine Durchgangsöffnung 146 mit Innengewinde 148 auf, in das ein Gewindestift 150 einschraubbar ist, um die Spreizung zu ermöglichen.

Handelt es sich bei der Hülse 118 um ein Blechteil, eine bevorzugte Ausführungsform, so kann insbesondere das Innengewinde in einem bei der Herstellung der Hülse 118 ausgebildeten Düsenansatz 152 ausgebildet werden.

Die als Bohrung zu bezeichnende Durchgangsöffnung 146 verläuft diametral gegenüberliegend zum Längsschlitz 144, so dass die Längsachse des Gewindestifts 150 den Längsschlitz 140 durchsetzt.

In der eingeschraubten Stellung des Gewindestifts 150 liegt dessen stirnseitiger Rand an abgeschrägten Begrenzungsrändern 154, 156 des Schlitzes 144, um ein Entlanggleiten an den Rändern 154, 156 beim weiteren Einschrauben des Gewindestifts 150 und somit ein Spreizen der Hülse 118 zu erleichtern.

Beim Wechselwirken des Gewindestifts 150 mit den Rändern 154, 156 des Schlitzes 144 werden bei einem weiteren Einschrauben (Pfeil 157) Kräfte auf die Hülse 118 in Richtung der Pfeile 158, 160, 162 eingeleitet, durch die das klemmende Fixieren der Hülse 118 in dem Rohr 112 sichergestellt wird. Diese Kräfte werden zum einen durch das Spreizen der Hülse 118 und zum anderen dadurch hervorgerufen, dass beim Eindrehen des Gewindestifts 150 der die Durchgangsöffnung 146 umgebende Bereich der Hülse 118 in Richtung der Innenwandung bzw. Innenfläche 147 des Rohrs 112 bewegt wird. Zug- und Druckkräfte treten auf, die durch die Pfeile 164, 166, 168 symbolisiert werden sollen.

Damit der Gewindestift 150 in das Innenwinde 148 eingeschraubt werden kann, muss selbstverständlich das Rohr 112, 114 mit einer Öffnung 170 auf die Bohrung 146 der Hülse 118 ausgerichtet sein.

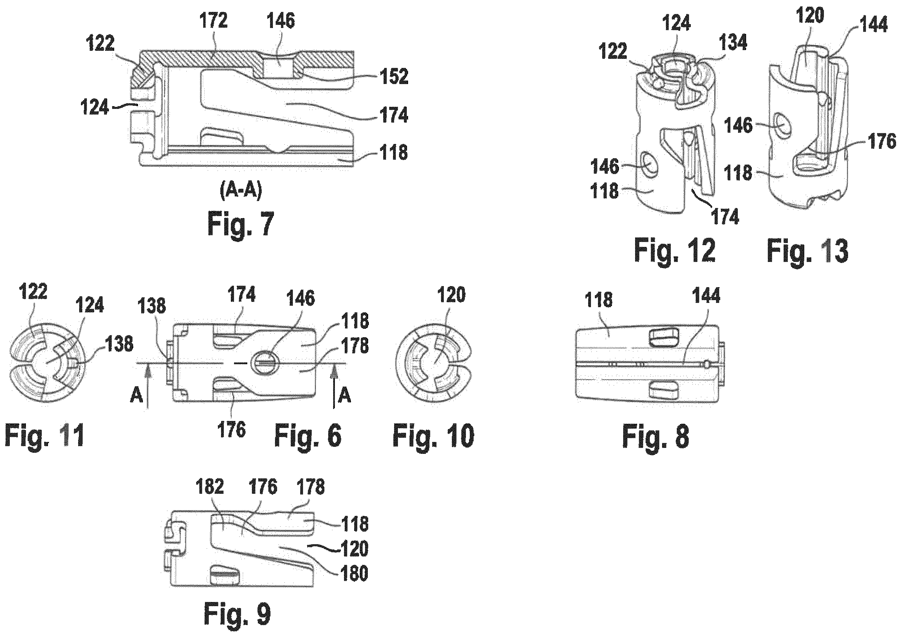

Um das Aufweiten bzw. Spreizen der Hülse 118 zu erleichtern, ist des Weiteren vorgesehen, dass von der offenen Stirnseite 120 ausgehend in der Umfangswandung 172 der Hülse 118 Ausschnitte 174, 176 ausgebildet sind, die einen Umfangswandabschnitt 178 begrenzen, in dem die Durchgangsöffnung 146 mit dem Innengewinde 148 verläuft. Dabei besteht jeder Ausschnitt 174, 176 aus einem von dem offenen Stirnbereich 120, also vom Stirnrand ausgehenden ersten Abschnitt 180 und einem inneren zweiten Abschnitt 182, dessen Breitenerstreckung größer als die des ersten Abschnitts 180 in Ebenen ist, die parallel zu der Bodenwandung 122 verlaufen, wie im Übrigen auch selbsterklärend aus den Zeichnungen ersichtlich ist. Hierdurch bedingt weist der Wandabschnitt 178 eine Art Kellenform auf, wie insbesondere aus der Fig. 6 ersichtlich ist.

Durch die diesbezügliche Ausbildung wird das Nach-Außen-Drücken des Umfangswandabschnitts 178 in Richtung der Innenwandung oder Innenfläche 147 des Rohrs 112, 114 beim Einschrauben des Gewindestifts 150 erleichtert, sobald sich dieser an den den Längsschlitz 144 begrenzenden Rändern 154, 156 abstützt.

Wie sich insbesondere aus der Fig. 6 ergibt, verläuft die Hülse 118 außenseitig konisch, d.h., der äußere Querschnitt der Bodenwandung 122 ist größer als der im offenen Stirnbereich 120. Dabei sollte der Querschnitt im Bereich der Bodenwandung 122 dem Innenquerschnitt des Rohrs 112, 114 entsprechen, so dass nach Ausrichten des Rohres 112, 114 auf die Hülse 118, d.h., dass die Öffnung 170 des Rohres 112, 114 fluchtend zu der Bohrung 146 in der Hülse 118 verläuft, ein unkontrolliertes Verschieben, insbesondere Verrutschen, dem Grunde nach nicht mehr möglich sein. Beim Fixieren des Rohres 112, 114 auf der Hülse 118 werden dann die Wandabschnitte der Hülse 118 beim Einschrauben des Gewindestifts 150 nach außen in Richtung der Innenfläche 147 des Rohrs 112, 114 gedrückt, um flächig an dieser anliegen zu können, so dass die gewünschte klemmende Fixierung sichergestellt ist.

Bei der Hülse 118 kann es sich um ein Blechstanzteil handeln. Dicke des Blechs kann im Bereich von 2 mm liegen.

Zu der Fig. 1 sei ergänzend angemerkt, dass in der Fig. 1a von dem Knotenelement vier Rohre 10, 12, 14, 16 ausgehen, es sich also um ein vierarmiges Knotenelement handelt.

Zwischen den Rohren 10, 14 bzw. 14, 12 bzw. 12, 16 können Tablare 20, 22, 24 angeordnet sein.

In der Fig. 1b sind die Rohre 10, 12 14, 16 entfernt. Man erkennt den Verbindungskörper 18 sowie die die Spreizkörper bildenden Hülsen 118. Auch sind Lochreihen der Tablare 20, 22, 24 erkennbar.

In der Fig. 1c ist das Knotenelement entfernt, so dass man die Bodenwandungen der Hülsen 118 erkennt.

## Patentansprüche

1. Verbindungssystem, umfassend zumindest ein Rohrelement (10, 12, 14, 16, 112, 114), einen zumindest einen Schlitz (144) aufweisenden Spreizkörper, ein in ein Innengewinde (148) eine Durchgangsöffnung (146) des Spreizkörpers schraubbares Schraubelement, mittels dessen der Spreizkörper zum klemmenden Fixieren in dem Rohrelement spreizbar ist, sowie einen mit dem Spreizköper verbindbaren Verbindungskörper (18), wobei der Spreizkörper ein Hülsenkörper (118) ist, das Innengewinde (148) diametral gegenüberliegend zu dem zumindest einen Schlitz (144) verläuft, und bei klemmender Fixierung des Hülsenkörpers in dem Rohrelement (10, 12, 14, 16, 112, 114) das Schraubelement zum Spreizen des Schlitzes (144) auf dessen den Schlitz begrenzende Randbereiche einwirkt,
**dadurch gekennzeichnet,**
**dass** der Hülsenkörper (118) eine Umfangswandung (172) hohlzylindrischer Geometrie aufweist, wobei ein erster Stirnbereich offen ist und gegenüberliegender zweiter Stirnbereich eine von einem mit dem Verbindungskörper (18) verbindbaren Verbindungselement (126) durchsetzbare Bodenwandung (122) aufweist, dass die Umfangswandung (172) zumindest zwei einen Umfangswandabschnitt (178) begrenzende Ausschnitte (174, 176) aufweist, in dem das Innengewinde (148) verläuft, und dass jeder Ausschnitt (174, 176) einen von dem offenen Stirnbereich ausgehenden in Längsachsenrichtung des Hülsenkörpers verlaufenden äußeren ersten Abschnitt (180) sowie einen bodenwandseitigen inneren zweiten Abschnitt (182) aufweist, der querschnittsmäßig gegenüber dem äußeren Abschnitt erweitert ist derart, dass der die Durchgangsöffnung (146) mit dem Innengewinde (148) aufweisende Umfangswandabschnitt (178) bodenwandseitig eine geringere Erstreckung als im Stirnrandbereich aufweist, betrachtet in parallel zur Bodenwandung (122) verlaufenden Ebenen.

2. Verbindungssystem nach Anspruch 1,
**dadurch gekennzeichnet,**
**dass** bei auf die Randbereiche des Schlitzes (144) einwirkendem Schraubelement und weiterem Spreizen des Schlitzes gleichzeitig ein das Innengewinde (148) umgebender Wandbereich des Spreizkörpers in Richtung Innenfläche (147) des Rohrelementes (112, 114) kraftbeaufschlagt ist.

3. Verbindungssystem nach zumindest einem der vorhergehenden Ansprüche,
**dadurch gekennzeichnet,**
**dass** die Ausschnitte (174, 176) symmetrisch zu einer Ebene verlaufen, die sich entlang des zu spreizenden Schlitzes (144) erstreckt und sowohl den Schlitz als auch die das Innengewinde (148) aufweisende Durchgangsöffnung (146) in dem Umfangswandabschnitt (178) mittig schneidet.

4. Verbindungssystem nach zumindest einem der vorhergehenden Ansprüche,
**dadurch gekennzeichnet,**
**dass** die Bodenwandung (122) außenseitig eine ringförmige Erhebung aufweist, die eine von dem Verbindungselement, wie Flachkopfschraube, zu durchsetzende Öffnung (124) umgibt.

5. Verbindungssystem nach zumindest einem der vorhergehenden Ansprüche,
**dadurch gekennzeichnet,**
**dass** von der Außenfläche der Bodenwandung (122) ein Vorsprung (138) ausgeht, der zur Verdrehsicherung einer in dem Verbindungskörper vorhandenen Aussparung (142) zugeordnet ist oder umgekehrt.

6. Verbindungssystem nach zumindest einem der vorhergehenden Ansprüche,
**dadurch gekennzeichnet,**
**dass** der Querschnitt des Hülsenkörpers (118) von der Bodenwandung (122) ausgehend sich in Richtung des offenen Stirnbereichs verringert.

7. Verbindungssystem nach zumindest einem der vorhergehenden Ansprüche,
**dadurch gekennzeichnet,**
**dass** Außenquerschnitt des Hülsenkörpers (118) im Bereich der Bodenwandung (122) dem Innenquerschnitt des Rohrelementes (112, 114) entspricht.

8. Verbindungssystem nach zumindest einem der vorhergehenden Ansprüche,
**dadurch gekennzeichnet,**
**dass** das Innengewinde (148) in einem Düsenzug des Hülsenkörpers (118) oder in einer in dem Hülsenkörper eingesetzten Einpressmutter oder -buchse vorgesehen ist.

9. Verbindungssystem nach zumindest einem der vorhergehenden Ansprüche,
**dadurch gekennzeichnet,**
**dass** der Hülsenkörper (118) aus Blech besteht und insbesondere ein Stanzteil ist.

10. Verbindungselement umfassend einen Spreizkörper in Form eines Hülsenkörpers (118), mit zumindest einem Längsschlitz (144) sowie ein in ein Innengewinde (148) einer Durchgangsöffnung (146) des Hülsenkörpers einschraubbares Schraubelement (150),
wobei diametral gegenüberliegend zu dem Längsschlitz die das Innengewinde aufweisende Durchgangsöffnung verläuft,
**dadurch gekennzeichnet,**
**dass** der Hülsenkörper (118) eine Umfangswandung (172) hohlzylindrischer Geometrie aufweist, wobei ein erster Stirnbereich offen ist und gegenüberliegender zweiter Stirnbereich eine von einem Verbindungselement (126) durchsetzbare Bodenwandung (122) aufweist, dass die Umfangswandung (172) zumindest zwei einen Umfangswandabschnitt (178) begrenzende Ausschnitte (174, 176) aufweist, in dem das ein Innengewinde (148) verläuft, und dass jeder Ausschnitt (174, 176) einen von dem offenen Stirnbereich ausgehenden in Längsachsenrichtung des Hülsenkörpers verlaufenden äußeren ersten Abschnitt (180) sowie einen bodenwandseitigen inneren zweiten Abschnitt (182) aufweist, der querschnittsmäßig gegenüber dem äußeren Abschnitt erweitert ist derart, dass der die Durchgangsöffnung (146) mit dem Innengewinde (148) aufweisende Umfangswandabschnitt (178) bodenwandseitig eine geringere Erstreckung als im Stirnrandbereich aufweist, betrachtet in parallel zur Bodenwandung (122) verlaufenden Ebenen.

11. Verbindungselement nach Anspruch 10,
**dadurch gekennzeichnet,**
**dass** die Bodenwandung (122) außenseitig eine ringförmige Erhebung aufweist, die eine von dem Verbindungselement, wie Flachkopfschraube, zu durchsetzende Öffnung (124) umgibt.

12. Verbindungselement nach Anspruch 10 oder 11,
**dadurch gekennzeichnet,**
**dass** die Bodenwandung (122) eine Außenfläche aufweist, von der ein Vorsprung (138) ausgeht, der zur Verdrehsicherung einer in dem Verbindungskörper vorhandenen Aussparung (142) zugeordnet ist oder umgekehrt.

13. Verbindungselement nach Anspruch 10 bis 12,
**dadurch gekennzeichnet,**
**dass** der Querschnitt des Hülsenkörpers (118) von der Bodenwandung (122) ausgehend sich in Richtung des offenen Stirnbereichs verringert.

14. Verbindungselement nach Anspruch 10 bis 13,
**dadurch gekennzeichnet,**
**dass** das Innengewinde (148) in einem Düsenzug des Hülsenkörpers (118) oder in einer in dem Hülsenkörper eingesetzten Einpressmutter oder -buchse vorgesehen ist.

15. Verbindungselement nach Anspruch 10 bis 14,
**dadurch gekennzeichnet,**
**dass** der Hülsenkörper (118) aus Blech besteht und insbesondere ein Stanzteil ist.

## Claims

1. A connection system, comprising at least one tube element (10, 12, 14, 16, 112, 114); an expansion body having at least one slot (144); a screw element screwable into a internal thread (148) of a passage opening (146) of the expansion body, by means of which the expansion body is expandable for clamping-type fixing inside the tube element; and a connection body (18) connectable to the expansion body, wherein the expansion body is a sleeve body (118), the internal thread (148) extends diametrically opposite to the at least one slot (144), and the screw element acts on the edge regions limiting the slot (144) to expand the latter when the sleeve body is fixed in clamping manner inside the tube element (10, 12, 14, 16, 112, 114), **characterized in**
**that** the sleeve body (118) has a peripheral wall (172) of hollow-cylindrical geometry, wherein a first end region is open and the opposite second end region has a bottom wall (122) which can be passed through by a connection element (126) connectable to the connection body (18), in that the peripheral wall (172) has at least two cutouts (174, 176) limiting a peripheral wall section (178) in which the internal thread (148) extends, and in that each cutout (174, 176) has an outer first section (180) starting from the open end region and extending in the longitudinal axis direction of the sleeve body and an inner second section (182) on the bottom wall side which is widened in its cross-section relative to the outer section such that the peripheral wall section (178) having the passage opening (146) with the internal thread (148) has on the bottom wall side a lesser extent than in the end edge region when viewed in planes parallel to the bottom wall (122).

2. The connection system according to claim 1,
**characterized in**
**that** when the screw element acts on the edge regions of the slot (144) and the slot is further expanded, a wall region of the expansion body surrounding the internal thread (148) is simultaneously subjected to a force in the direction of the inner face (147) of the tube element (112, 114).

3. The connection system according to at least one of the preceding claims,
**characterized in**
**that** the cutouts (174, 176) extend symmetrically to a plane that extends along the slot (144) to be expanded and intersects through the middle both the slot and the passage opening (146) having the internal thread (148) in the peripheral wall section (178).

4. The connection system according to at least one of the preceding claims,
**characterized in**
**that** the bottom wall (122) has on the outside an annular raised portion that surrounds an opening (124) to be passed through by the connection element, such as a flat-headed screw.

5. The connection system according to at least one of the preceding claims,
**characterized in**
**that** a projection (138) which, for preventing rotation, is associated with a recess (142) present in the connection body or vice versa, extends from outer face of the bottom wall (122).

6. The connection system according to at least one of the preceding claims,
**characterized in**
**that** the cross-section of the sleeve body (118) decreases, starting from the bottom wall (122), in the direction of the open end region.

7. The connection system according to at least one of the preceding claims,
**characterized in**
**that** the outer cross-section of the sleeve body (118) in the region of the bottom wall (122) corresponds to the inner cross-section of the tube element (112, 114).

8. The connection system according to at least one of the preceding claims,
**characterized in**
**that** the internal thread (148) is provided inside an extruded hole in the sleeve body (118) or in a press-in nut or bush inserted in the sleeve body.

9. The connection system according to at least one of the preceding claims,
**characterized in**
**that** the sleeve body (118) is made of sheet metal and is in particular a stamped part.

10. A connection element comprising an expansion body in the form of a sleeve body (118) with at least one longitudinal slot (144) and a screw element (150) screwable into an internal thread (148) of a passage opening (146) of the sleeve body,
wherein the passage opening having the internal thread extends diametrically opposite to the longitudinal slot,
**characterized in**
**that** the sleeve body (118) has a peripheral wall (172) of hollow-cylindrical geometry, wherein a first end region is open and an opposite second end region has a bottom wall (122) which can be passed through by a connection element (126), in that the peripheral wall (172) has at least two cutouts (174, 176) limiting a peripheral wall section (178) inside which the internal thread (148) extends, and in that each cutout (174, 176) has an outer first section (180) starting from the open end region and extending in the longitudinal axis direction of the sleeve body, and an inner second section (182) on the bottom wall side which is widened in its cross-section relative to the outer section such that the peripheral wall section (178) having the passage opening (146) with the internal thread (148) has on the bottom wall side a smaller extent than in the end edge region when viewed in planes parallel to the bottom wall (122).

11. The connection element according to claim 10,
**characterized in**
**that** the bottom wall (122) has on the outside an annular raised portion that surrounds an opening (124) to be passed through by the connection element, such as a flat-headed screw.

12. The connection element according to claim 10 or 11,
**characterized in**
**that** the bottom wall (122) has an outer face from which extends a projection (138) which, for preventing rotation, is associated with a recess (142) present in the connection body or vice versa.

13. The connection element according to claims 10 to 12,
**characterized in**
**that** the cross-section of the sleeve body (118) decreases, starting from the bottom wall (122), in the direction of the open end region.

14. The connection element according to claims 10 to 13,
**characterized in**
**that** the internal thread (148) is provided inside an extruded hole in the sleeve body (118) or in a press-in nut or bush inserted in the sleeve body.

15. The connection element according to claims 10 to 14,
**characterized in**
**that** the sleeve body (118) is made of sheet metal and is in particular a stamped part.

## Revendications

1. Système de raccordement, comprenant au moins un élément tubulaire (10, 12, 14, 16, 112, 114), un corps d'écartement présentant au moins une fente (144), un élément de vissage vissable dans un filet intérieur (148) d'un orifice de passage (146) du corps d'écartement, au moyen duquel le corps d'écartement est écartable pour une fixation serrante dans l'élément tubulaire, ainsi qu'un corps de raccordement (18) reliable au corps d'écartement, sachant que le corps d'écartement est un corps de manchon (118), que le filet intérieur (148) s'étend diamétralement opposé à ladite au moins une fente (144), et que lors de la fixation serrante du corps de manchon dans l'élément tubulaire (10, 12, 14, 16, 112, 114), l'élément de vissage agit, pour écarter la fente (144), sur ses zones périphériques délimitant la fente,
**caractérisé en ce**
**que** le corps de manchon (118) présente une paroi circonférentielle (172) ayant une géométrie en forme de cylindre creux, sachant qu'une première zone frontale est ouverte et qu'une seconde zone frontale opposée présente une paroi de fond (122) pouvant être traversée par un élément de raccordement (126) reliable au corps de raccordement (18), que la paroi circonférentielle (172) présente au moins deux découpes (174, 176) délimitant une section de la paroi circonférentielle (178), dans laquelle le filet intérieur (148) s'étend, et que chaque découpe (174, 176) présente une première section extérieure (180) s'étendant en direction de l'axe longitudinal du corps de manchon, partant de la zone frontale ouverte, ainsi qu'une seconde section intérieure (182) du côté de la paroi de fond, qui est élargie au niveau de sa section transversale par rapport à la section extérieure de sorte que la section de la paroi circonférentielle (178) présentant l'orifice de passage (146) avec le filet intérieur (148) présente, du côté de la paroi de fond, une extension inférieure à celle dans la zone périphérique frontale, observée dans des plans parallèles à la paroi de fond (122).

2. Système de raccordement selon la revendication 1,
**caractérisé en ce**
**que** lors de l'action de l'élément de vissage sur les zones périphériques de la fente (144) et d'un écartement plus poussé de la fente, une zone de paroi du corps d'écartement, entourant le filet intérieur (148) est soumis à une force en direction de la surface intérieure (147) de l'élément tubulaire (112, 114).

3. Système de raccordement selon au moins l'une des revendications précédentes, **caractérisé en ce**
**que** les découpes (174, 176) s'étendent symétriquement à un plan qui s'étend le long de la fente (144) à écarter et coupe aussi bien la fente que l'orifice de passage (146) présentant le filet intérieur (148) au milieu dans la section de la paroi circonférentielle (178).

4. Système de raccordement selon au moins l'une des revendications précédentes, **caractérisé en ce**
**que** la paroi de fond (122) présente, côté extérieur, une bosse de forme annulaire qui entoure un orifice (124) à traverser par l'élément de raccordement, tel qu'une vis à tête plate.

5. Système de raccordement selon au moins l'une des revendications précédentes, **caractérisé en ce**
**qu'**une saillie (138) part de la surface extérieure de la paroi de fond (122), qui est associée, pour le blocage antirotation, à un évidement (142) présent dans le corps de raccordement, ou inversement.

6. Système de raccordement selon au moins l'une des revendications précédentes, **caractérisé en ce**
**que** la section du corps de manchon (118) rétrécit en direction de la zone frontale ouverte, en partant de la paroi de fond (122).

7. Système de raccordement selon au moins l'une des revendications précédentes, **caractérisé en ce**
**que** la section extérieure du corps de manchon (118) correspond, dans la zone de la paroi de fond (122), à la section intérieure de l'élément tubulaire (112, 114).

8. Système de raccordement selon au moins l'une des revendications précédentes, **caractérisé en ce**
**que** le filet intérieur (148) est prévu dans un passage de filière du corps de manchon (118) ou dans un écrou ou une douille enfoncés, placés dans le corps de manchon.

9. Système de raccordement selon au moins l'une des revendications précédentes, **caractérisé en ce**
**que** le corps de manchon (118) est constitué de tôle et est notamment une pièce de découpage.

10. Élément de raccordement comprenant un corps d'écartement en forme de corps de manchon (118), avec au moins une fente longitudinale (144) ainsi qu'un élément de vissage (150) vissable dans un filet intérieur (148) d'un orifice de passage (146) du corps de manchon.
sachant que l'orifice de passage présentant le filet intérieur s'étend diamétralement opposé à la fente longitudinale,
**caractérisé en ce**
**que** le corps de manchon (118) présente une paroi circonférentielle (172) ayant une géométrie en forme de cylindre creux, sachant qu'une première zone frontale est ouverte et qu'une seconde zone frontale opposée présente une paroi de fond (122) pouvant être traversée par un élément de raccordement (126), que la paroi circonférentielle (172) présente au moins deux découpes (174, 176) délimitant une section de la paroi circonférentielle (178), dans laquelle ledit filet intérieur (148) s'étend, et que chaque découpe (174, 176) présente une première section extérieure (180) s'étendant en direction de l'axe longitudinal du corps de manchon, en partant de la zone frontale ouverte, ainsi qu'une seconde section intérieure (182) du côté de la paroi de fond, qui est élargie au niveau de sa section transversale par rapport à la section extérieure de sorte que la section de la paroi circonférentielle (178) présentant l'orifice de passage (146) avec le filet intérieur (148) présente, du côté de la paroi de fond, une extension inférieure à celle dans la zone périphérique frontale, observée dans des plans parallèles à la paroi de fond (122).

11. Élément de raccordement selon la revendication 10,
**caractérisé en ce**
**que** la paroi de fond (122) présente, côté extérieur, une bosse de forme annulaire qui entoure un orifice (124) à traverser par l'élément de raccordement, tel qu'une vis à tête plate.

12. Élément de raccordement selon la revendication 10 ou 11,
**caractérisé en ce**
**que** la paroi de fond (122) présente une surface extérieure de laquelle part une saillie (138) qui est associée, pour le blocage antirotation, à un évidement (142) présent dans le corps de raccordement, ou inversement.

13. Élément de raccordement selon les revendications 10 à 12,
**caractérisé en ce**
**que** la section du corps de manchon (118) rétrécit en direction de la zone frontale ouverte, en partant de la paroi de fond (122).

14. Élément de raccordement selon les revendications 10 à 13,
**caractérisé en ce**
**que** le filet intérieur (148) est prévu dans un passage de filière du corps de manchon (118) ou dans un écrou ou une douille enfoncés, placés dans le corps de manchon.

15. Élément de raccordement selon les revendications 10 à 14,
**caractérisé en ce**
**que** le corps de manchon (118) est constitué de tôle et est notamment une pièce de découpage.
